# FASCICULE DE BREVET EUROPEEN

(11) **EP 1 116 228 B1**
(45) Date de publication et mention de la délivrance du brevet: **17.01.2007**
(21) Numéro de dépôt: 99943037.4
(22) Date de dépôt: 23.09.1999
(51) Int. Cl.: G11B 20/00, G06F 1/00

(54) **PROTECTION CONTRE LA COPIE DE DONNEES NUMERIQUES STOCKEES SUR UN SUPPORT D'INFORMATIONS**
SCHUTZ GEGEN DAS KOPIEREN VON DIGITALEN DATEN AUF EINEM INFORMATIONSTRÄGER
COPY PROTECTION METHOD FOR DIGITAL DATA STORED ON A MEDIUM

(30) Priorité: 23.09.1998 FR 9811860
(43) Date de publication de la demande: 18.07.2001
(73) Titulaire: THOMSON multimedia, 92100 Boulogne Billancourt (FR)
(72) Inventeur: CHEVREAU, Sylvain, Thomson Multimedia, 92648 Boulogne (FR); FURON, Teddy, Thomson Multimedia, 92648 Boulogne (FR)
(74) Mandataire: Kohrs, Martin
(86) Numéro de dépôt international: PCT/FR1999/002267
(87) Numéro de publication internationale: WO 2000/017871

(56) Documents cités:
- EP-A- 0 413 350
- EP-A- 0 416 663
- EP-A- 0 735 752
- WO-A1-96/00963
- WO-A1-97/13248
- WO-A1-97/33283
- US-A- 4 937 679

## Description

L'invention concerne une méthode et un dispositif permettant de protéger contre la copie de données numériques stockées sur un support d'informations.

Une possibilité inhérente aux données numériques est qu'elles peuvent être copiées sans perte notable de qualité puisque la copie consiste à transmettre de la source à l'enregistreur une série de « 1 » et de « 0 ». Le plus grand nombre d'erreurs survenant éventuellement lors de la copie peuvent être palliées en utilisant des méthodes de correction d'erreur. Ainsi lorsqu'un support d'informations contient des données numériques, il est en principe relativement simple d'enregistrer à l'identique sur un support enregistrable le contenu du support d'informations.

De nombreux types et sortes de supports d'informations sont utilisés pour stocker de l'information de toute nature sous forme numérique. Par exemple une bande magnétique, un disque optique enregistrable ou non (CD, CD-R, CD-RW, DVD, DVD-R, disque Magneto-optique etc., respectivements de l'anglais Compact Disc, CD-Recordable, CD-Read Write, Digital Versatile Disc, DVD-Recordable) peut stocker de l'information audio et / ou vidéo sous forme numérique.

Afin de mieux préserver par exemple les intérêts des auteurs de l'information stockée ou ceux de producteurs de support d'informations préenregistré, il est désirable de limiter les possibilités de copier librement et simplement les données numériques. Divers mécanismes et possibilités existent actuellement pour protéger des données numériques contre une copie illégitime.

De façon connue les données numériques peuvent être chiffrées lorsqu'elles sont stockées sur le support d'informations. Le chiffrage permet de limiter l'utilisation des données numériques au détenteur d'une clé publique ou privée de déchiffrage. Le chiffrage est par exemple utilisé dans la protection de données sur les DVD, disques optiques utilisés pour stocker des données vidéo sous forme numérique. Ainsi un lecteur de DVD nécessite une clé appropriée pour déchiffrer les données lues sur le DVD.

Une façon de protéger des données numériques contre la copie consiste à les doter d'un tatouage, c'est-à-dire de données auxiliaires attachées aux données numériques. Le tatouage doit être non-modifiable et non effaçable. La lecture des données se fait à l'aide d'une clé publique qui identifie le tatouage.

La clé publique est un code bien connu par le public, ou plus précisément contenu dans la plupart des lecteurs de supports d'informations. Lors d'une éventuelle copie des données numériques tatouées, une clé privée est requise pour remettre en place le tatouage sur la copie, sans quoi la copie devient illégale puisque dépourvue de tatouage. La clé privée est détenue par l'auteur ou le producteur de l'information ainsi tatouée. Les données numériques copiées sans tatouage ne sont plus lues par le lecteur car celui-ci n'identifie pas de tatouage là où il devrait en trouver un. Ainsi le tatouage ne permet pas de faire de copie sans la clé privée. Si une copie est nécessaire alors l'enregistreur doit intégrer cette clé privée.

Le tatouage n'empêche pas la copie par voie analogique des données numériques, c'est-à-dire une copie qui nécessiterait d'abord une conversion des données numériques en signal analogique et qui prendrait le signal analogique comme source pour la copie.

Une solution connue pour éviter la copie d'un support numérique par voie analogique et plus particulièrement dans le domaine de la vidéo et de la télévision consiste à altérer le signal analogique de telle façon qu'il puisse être utilisé pour afficher une image sur l'écran d'un téléviseur par le biais d'une entrée analogique de ce téléviseur, mais que le même signal ne soit pas utilisable pour faire une copie avec un magnétoscope. Plus précisément un circuit électronique est employé pour influer sur des paramètres de synchronisation de l'image. Ces paramètres de synchronisation sont perçus différemment par un téléviseur et par un magnétoscope. Cette solution ne permet pas d'empêcher la copie numérique de données numériques.

Une autre solution pour limiter les copies numériques de données numériques consiste à doter celles-ci d'informations de gestion des générations. En principe cette information véhicule l'information « ne jamais copier » pour des données qui n'ont pas le droit d'être copiées et l'information « copie » ou « copie numéro X » si les données sont une copie de première ou x-ième génération d'un original. Ainsi un enregistreur peut à l'aide de ces informations savoir si les données numériques à copier ont le droit d'être copiées numériquement et empêcher la copie si elle est interdite pour la 2ième ou (X+1)ième génération. A chaque copie l'information de gestion des générations est mise à jour. Cette manipulation de l'information de gestion des générations la rend vulnérable à être faussée. En effet l'information de gestion des générations est à un stade de la copie disponible en clair c'est-à-dire sous forme déchiffrée. La manipulation nécessite aussi que l'enregistreur numérique soit équipé en conséquence. L'information de gestion des générations ne permet pas d'éviter en soi les copies par voie analogique.

Le document WO-A-97 13248 décrit une méthode de tatouage de données numériques codées selon la norme MPEG dans laquelle le tatouage est inséré par sélection de paramètres de codages particuliers, par exemple le nombre de tranches par image. Un schéma de protection contre la copie utilisant une combinaison de marqueur de médium et de marqueur de contenu (tel que le tatouage) pour autoriser ou non le décodage de données par un lecteur de disques optiques est également décrit.

Un objet de l'invention consiste à trouver une solution de protection contre la copie numérique dans laquelle aucune information relative à la génération de copie est disponible en clair lors de la copie.

Un autre objet de l'invention consiste à trouver une solution dans laquelle aucune modification de données relatives à la protection contre la copie soit entreprise à l'enregistrement éventuel d'une copie.

Une solution que propose l'invention prévoit une méthode de protection contre la copie de données numériques stockées sur un support d'informations, consistant à délivrer une permission ou une interdiction de copie et/ou de lecture desdites données numériques en fonction de l'identification ou non d'au moins:
- un chiffrage desdites données numériques ; et
- un tatouage desdites données numériques.

Selon une caractéristique particulière de l'invention, une permission ou une interdiction de copie et/ou de lecture desdites données numériques est délivrée en fonction en outre de l'identification d'un type enregistrable ou non-enregistrable dudit support d'information.

Selon une autre caractéristique particulière de l'invention, une permission ou une interdiction de copie et/ou de lecture desdites données numériques est délivrée en fonction en outre de l'identification ou non d'une signature cryptographique accompagnant lesdites données numériques.

Une première réalisation avantageuse de l'invention prévoit qu'une permission de copie numérique est délivrée lorsque :
- un chiffrage desdites données numériques a été identifié ;
- un tatouage desdites données numériques a été identifié ;
- un type de support non-enregistrable a été identifié ; et
- une signature cryptographique accompagnant lesdites données numériques a été identifiée.

Une deuxième réalisation avantageuse de l'invention prévoit qu'une permission de copie numérique est délivrée lorsque :
- un chiffrage desdites données numériques n'a pas été identifié ; et
- un tatouage desdites données numériques n'a pas été identifié.

Une troisième réalisation avantageuse de l'invention prévoit qu'une interdiction de lecture desdites données numériques est délivrée lorsque :
- un chiffrage desdites données numériques n'a pas été identifié ; et
- un tatouage desdites données numériques a été identifié.

Une quatrième réalisation avantageuse de l'invention prévoit qu'une interdiction de copie est délivrée lorsque :
- un chiffrage desdites données numériques a été identifié ;
- un tatouage desdites données numériques a été identifié ; et
- un type de support enregistrable a été identifié.

Une cinquième réalisation avantageuse de l'invention prévoit qu'une interdiction de copie est délivrée lorsque :
- un chiffrage desdites données numériques a été identifié ;
- un tatouage desdites données numériques a été identifié ;
- un type de support non-enregistrable a été identifié ; et
- aucune signature cryptographique accompagnant lesdites données numériques n'a été identifiée.

Une sixième réalisation avantageuse de l'invention prévoit une conversion des données numériques en signaux analogiques et une altération des signaux analogiques si une interdiction de copie numérique est délivrée.

Une septième réalisation avantageuse de l'invention prévoit que l'interdiction de copie numérique comprend une suppression de sortie des données numériques.

Une autre solution que propose l'invention prévoit un dispositif de lecture de données numériques stockées sur un support d'informations comprenant au moins,

une sortie numérique pour délivrer des signaux représentatifs des données numériques lors d'une lecture desdites données numériques ;

une sortie analogique pour délivrer des signaux analogiques représentatifs des données numériques lors d'une lecture desdites données numériques ;
des moyens de détection :
- d'un chiffrage desdites données numériques ;
- d'un tatouage desdites données numériques ;
- d'un type enregistrable ou non enregistrable dudit support d'information ;
- d'une signature cryptographique accompagnant lesdites données numériques ;
   un système pour déchiffrer lesdites données numériques lorsqu'un chiffrage est détecté ;
   un système de protection contre la copie desdites données numériques recevant des signaux desdits moyens de détection et générant un signal de permission de copie ou un signal d'interdiction de copie en mettant en oeuvre la première, la deuxième, la quatrième ou la cinquième réalisation décrite ci-dessus;
   des moyens de contrôle de l'enregistrement supprimant les signaux délivrés à la sortie numérique lorsque lesdits moyens de contrôle reçoivent un signal d'interdiction de copie du système de protection ;
   un système de protection de la lecture recevant des signaux desdits moyens de détection et générant un signal d'interdiction de lecture en mettant en oeuvre la troisième réalisation décrite ci-dessus ; et
   des moyens de contrôle de la lecture interrompant la lecture des données ou leur sortie vers la sortie analogique lorsque lesdits moyens de contrôle reçoivent un signal d'interdiction de lecture du système de protection.

Dans la suite, des exemples de réalisation sont présentés qui permettront d'illustrer et de mieux comprendre l'invention, en faisant référence aux figures 1 à 8, brièvement décrites ci-dessous :
Fig. 1 contient un organigramme illustrant un mode de réalisation de l'invention,
Fig. 2 à 5 contiennent des organigrammes illustrant des aspects de l'invention,
Fig. 6 contient un organigramme illustrant une conversion numérique-analogique selon l'invention,
Fig. 7 contient un schéma illustrant un dispositif selon l'invention.

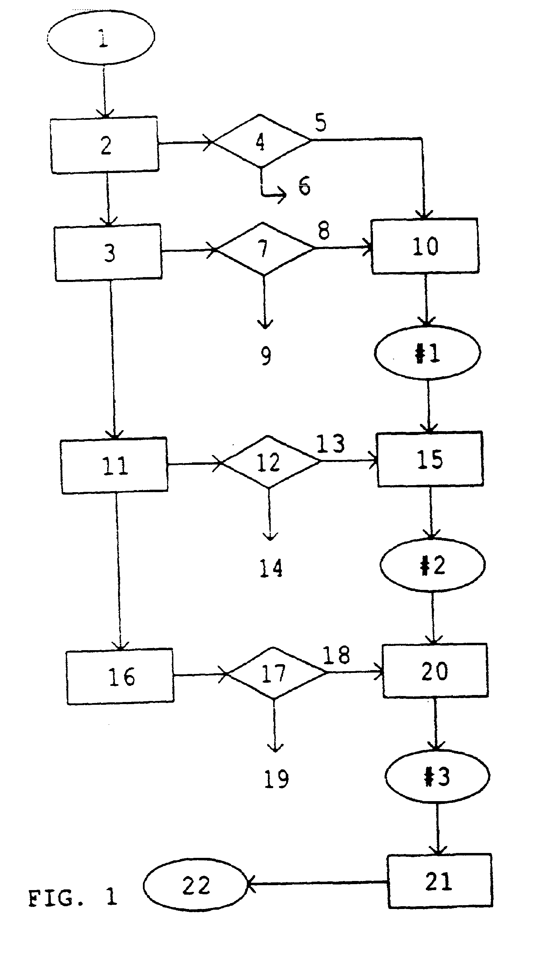

La Fig. 1 contient un organigramme dans lequel des données numériques stockées sur un support d'informations 1 sont soumises à une première identification d'un chiffrage 2 afin de vérifier si les données numériques sont stockées sous forme chiffrée, puis à une seconde identification d'un tatouage 3 pour voir si les données sont pourvues d'un tatouage numérique. Une première bifurcation 4 permet de distinguer les cas où un chiffrage est identifié 5 ou non 6. Une seconde bifurcation 7 permet de distinguer les cas où un tatouage est identifié 8 ou non 9. Si les cas 5 et 8 sont vérifiés une première détermination 10 génère une première marque #1.

Une troisième identification 11 d'un type du support d'informations 1 sert à voir si le support d'informations est par exemple du type non-enregistrable ou enregistrable. Une information sur le type peut être contenue dans les données numériques en soi où résulter de mesures physiques de paramètres du support d'informations 1 lors par exemple d'une initialisation dans un lecteur du support d'informations 1. Une troisième bifurcation 12 permet de distinguer les cas où le type serait d'un type déterminé 13, par exemple un support d'informations non enregistrable tel qu'un disque optique pressé, ou non 14. Si le cas 13 est vérifié et la première marque #1 a été générée alors une seconde détermination 15 génère une seconde marque #2.

Une quatrième identification 16 de données de signature cryptographique vérifie si les données numériques possèdent une signature cryptographique. Une quatrième bifurcation 17 permet de distinguer les cas où la signature cryptographique est présente 18 ou non 19. Si le cas 18 est vérifié et la seconde marque #2 a été générée alors une troisième détermination 20 génère une troisième marque #3.

En présence de la troisième marque #3 une première délivrance 21 d'une permission de copie numérique 22 des données numériques est réalisée.

Globalement l'organigramme de la Fig. 1 montre comment divers critères afférents aux données numériques mais aussi au support d'informations peuvent mener à la délivrance d'une permission de copie numérique, l'idée étant de ne permettre une copie que dans des conditions définies. Par exemple les données ne doivent pas avoir été manipulées donc doivent être chiffrées et tatouées. Ensuite les données ne doivent pas encore avoir été copiées. Si les données sont sur un disque non-enregistrable alors a priori les données sont sur un support d'informations d'origine. Finalement les données doivent posséder une signature cryptographique. Celle-ci indique que les données peuvent être copiées. C'est alors que les données reçoivent la permission de copie numérique. Un résultat de la copie des données sera identique à l'original sauf en ce qui concerne le support d'informations qui devra être enregistrable. Une nouvelle copie des données à partir du support d'informations enregistrable serait impossible car la deuxième marque #2 ne pourrait être générée après la troisième identification 11. En effet la troisième bifurcation 12 nous mènerait dans le cas 14.

D'autres cas de figure sont à envisager lorsque par exemple le chiffrage ou le tatouage des données numériques ne peuvent être identifiés. Normalement le chiffrage et le tatouage vont de pair et l'absence de l'un ou de l'autre est un indice de manipulation illicite des données numériques. Il s'agit alors d'aller plus loin que de simplement interdire la copie des données numériques. Il faut empêcher la lecture de celles-ci.

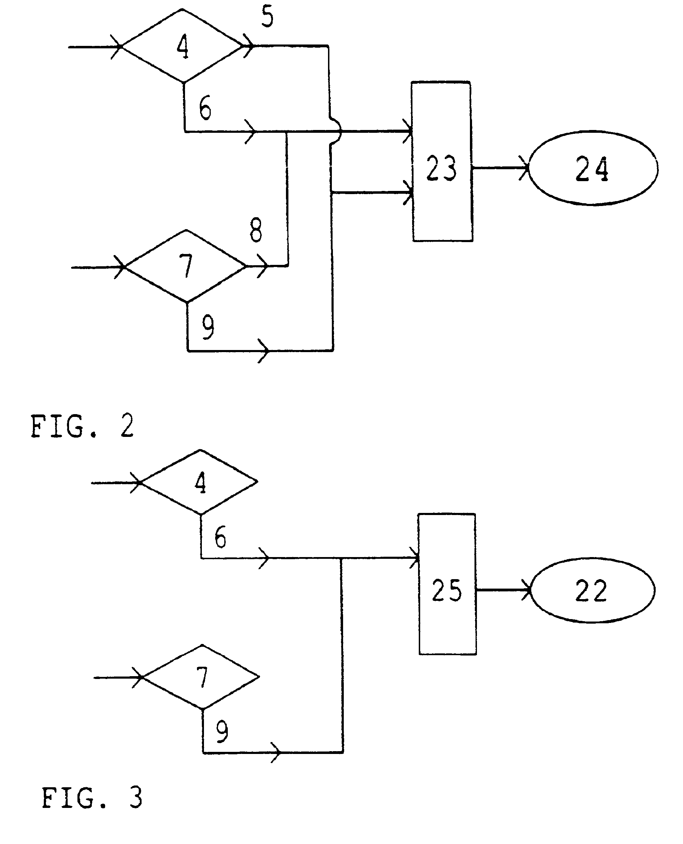

Un organigramme dans la Fig. 2 illustre deux cas de figure où le chiffrage et le tatouage ne sont pas identifiés ensembles. Un cas de figure prévoit que la première bifurcation 4 livre le cas 6, c'est-à dire que la première identification d'un chiffrage est négative, et que la seconde bifurcation 7 livre le cas 8, c'est-à dire qu'un tatouage est présent. Alors une seconde délivrance 23 génère une interdiction de lecture des données numériques 24. En pratique cela pourrait par exemple conduire à une interruption de la lecture des données. Un autre cas de figure prévoit que la première bifurcation 4 livre le cas 5, c'est-à dire qu'un chiffrage est identifié, et que la seconde bifurcation 7 livre le cas 9, c'est -à dire que la seconde identification d'un tatouage est négative. Dans cet autre cas la seconde délivrance génère l'interdiction de lecture 24.

La méthode décrite permet de copier librement des données numériques qui ne sont pas protégées, par exemple des données dépourvues de chiffrage et de tatouage. La Fig. 3 contient un organigramme dans lequel la première et la seconde bifurcation 4 et 7 livrent chacune un cas d'identification négative respectivement les cas 6 pour le chiffrage et 9 pour le tatouage. Une troisième délivrance 25 génère alors directement la permission de copie numérique 22.

Dans le dernier cas il importe peu que les données soient sur un support d'informations enregistrable ou non. L'absence de chiffrage et de tatouage indique un niveau de protection des données minimum.

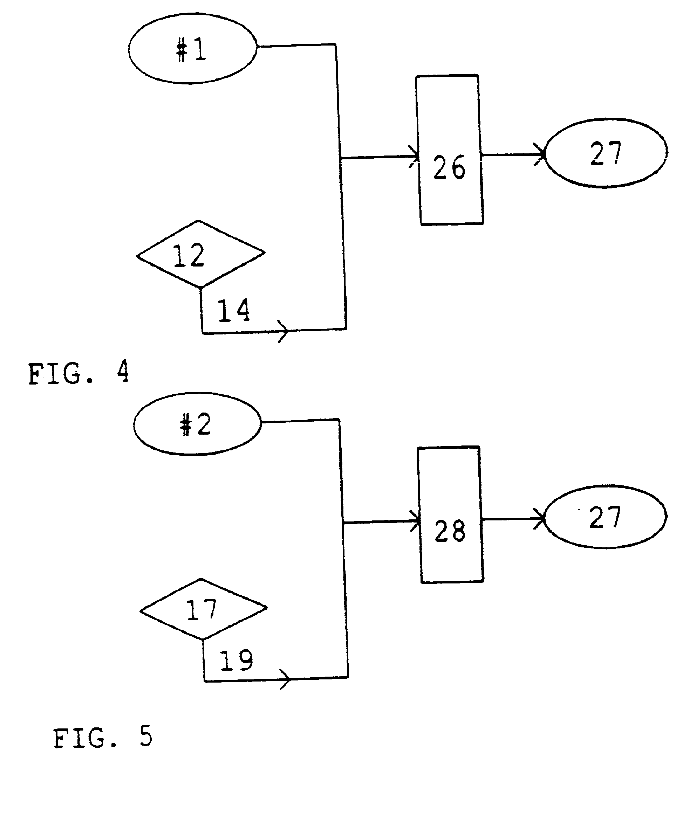

Dans certains cas de figure les données doivent pouvoir être lues et exploitées mais non copiées. C'est le cas notamment lorsque l'on achète un support d'informations contenant des données numériques dont l'auteur ou le producteur veut éviter la copie. C'est le cas également lorsqu'un support d'informations enregistrable contenant des données copiées légalement est lu. Un tel cas est illustré à l'aide d'un organigramme dans la Fig. 4 où une quatrième délivrance 26 vérifie que la première marque #1 a été délivrée et que le cas 14 d'identification d'un type de support d'informations différent du type déterminé a eu lieu avant de générer une interdiction de copie 27. En pratique le lecteur devrait mettre en oeuvre un dispositif empêchant une copie des données numériques, par exemple en inhibant une sortie numérique du lecteur.

Un autre tel cas est illustré à l'aide d'un organigramme dans la Fig. 5. Si la deuxième marque #2 est identifiée et le cas 19 signalise une quatrième identification négative, c'est à dire qu'aucune signature cryptographique permettant une copie des données est présente, alors une cinquième délivrance 28 génère l'interdiction de copie 27.

Il est entendu que le fait qu'aucune signature cryptographique permettant une copie des données ne soit identifiée n'exclut pas la présence d'une signature cryptographique particulière interdisant la copie.

Tout au long de la description il a déjà été fait mention du fait que le support d'informations 1 est utilisé dans un lecteur approprié. Les données numériques stockées sur le support d'informations 1 peuvent être dans certains cas acheminées vers une sortie numérique du lecteur. Dans l'exemple d'un lecteur DVD (disque optique pour données numériques vidéo/audio), une sortie numérique peut être prévue pour sortir un signai représentatif des données vers un lecteur / enregistreur DVD-R (ou autre) aux fins d'une copie, ou vers un ordinateur pour faire du traitement d'images. En général le lecteur prévoit aussi une sortie analogique afin de pouvoir transmettre un signal analogique représentatif des données numériques vers l'entrée analogique par exemple d'un téléviseur.

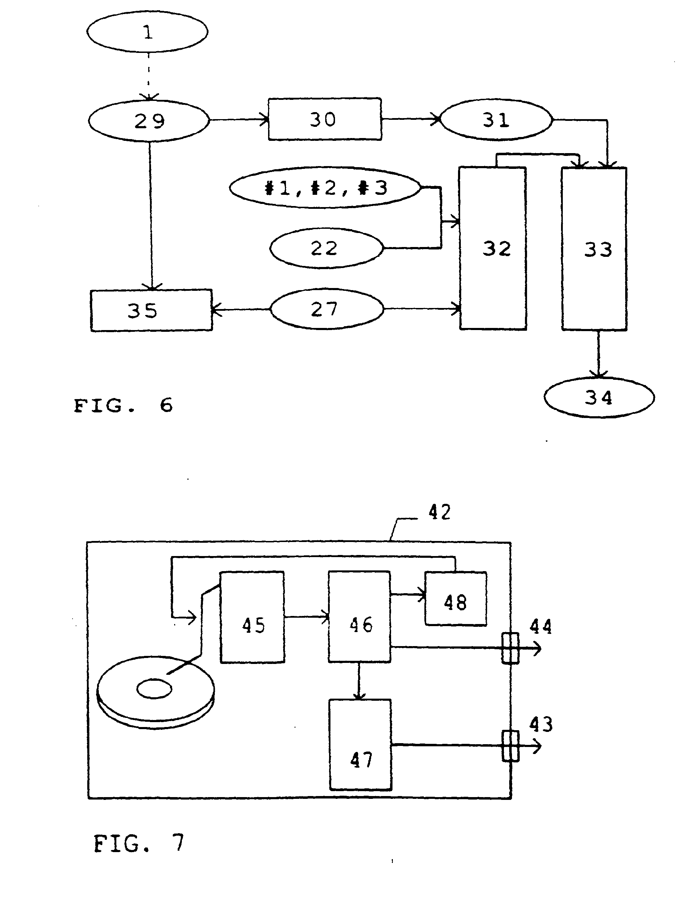

Un organigramme dans la Fig. 6 indique par une flèche pointillée que le support d'informations livre des données numériques 29. Une conversion 30 permet de convertir les données numériques 29 en signaux analogiques 31. Une présence de la permission de copie numérique 22 ensemble avec l'une quelconque des première, seconde ou troisième marques (#1, #2, #3), ou une présence de l'interdiction de copie numérique 27, est détectée dans une détection 32 qui le cas échéant déclenche une altération 33 des signaux analogiques pour obtenir des signaux analogiques altérés 34. Les signaux analogiques sont par exemple altérés de façon à ce qu'ils puissent être utilisés pour obtenir des images sur un téléviseur mais qu'il soit impossible de les copier à l'aide d'un magnétoscope à entrée analogique.

Avantageusement il est prévu une suppression à une sortie numérique du lecteur des données numériques 35 en présence de l'interdiction de copie numérique 27.

Le chiffrage des données numériques sur le support d'informations se fait normalement du coté du producteur.

Les données numériques ainsi que la signature cryptographique qui y est éventuellement associée sont déchiffrées dans le lecteur de données. Mais lorsque ces données doivent être transmises sur une sortie numérique du lecteur, les données sont chiffrées.

Un dispositif de lecture de données numériques 42 illustré à la Fig. 7 comprend une sortie numérique 43 qui permet de livrer des signaux représentatifs des données numériques lors d'un lecture des données numérique d'un support d'informations. Cette sortie 43 peut par exemple être réalisée à l'aide d'un bus numérique au standard IEEE1394. Une sortie analogique 44 permet de livrer des signaux analogiques représentatifs des mêmes données numériques. Un système de déchiffrage 45 permet de déchiffrer des données numériques si celles-ci sont chiffrées, mais aussi d'identifier un éventuel tatouage et des données de signature cryptographique. Le système de déchiffrage permet de mettre en oeuvre par exemple les identifications 2, 3, 11 et 16 de la méthode illustrée à la Fig. 1.

Un système de protection contre la copie des données numériques 46 utilise des signaux émis par le système de déchiffrage 45 et les évalue en implémentant les déterminations 10, 15 et 20 de la méthode illustrée à la Fig. 1, et délivre après avoir déterminé les marques #1, #2 et #3 un signal de permission de copie.

Une partie de contrôle de l'enregistrement 47 permet de gérer un flux de données numériques vers la sortie numérique. Cette partie peut notamment activer le flux lorsqu'elle obtient du système de protection 46 le signal de permission de copie.

Le système de protection contre la copie des données numériques 46 peut également jouer le rôle d'un système de protection contre la lecture. Ce dernier système génère à l'aide des signaux reçus du système de déchiffrage 45 un signal d'interdiction de lecture lorsque les données numériques ne sont pas chiffrées mais tatouées ou encore lorsque les données numériques sont chiffrées mais non tatouées.

Une partie de contrôle de la lecture 48 permet d'interrompre la lecture des données numériques lorsqu'elle reçoit le signal d'interdiction du système de protection contre la lecture 46.

### Liste des références

- 1.: support d'informations
- 2.: première identification d'un chiffrage
- 3.: seconde identification d'un tatouage
- 4.: première bifurcation
- 5.: chiffrage identifié
- 6.: chiffrage non identifié
- 7.: seconde bifurcation
- 8.: tatouage identifié
- 9.: tatouage non identifié
- 10.: première détermination
- #1.: première marque
- 11.: troisième identification d'un type de support d'informations
- 12.: quatrième bifurcation
- 13.: type déterminé
- 14.: pas le type déterminé
- 15.: seconde détermination
- #2.: seconde marque
- 16.: quatrième identification de données de signature cryptographique
- 17.: quatrième bifurcation
- 18.: signature cryptographique présente
- 19.: signature cryptographique non présente
- 20.: troisième détermination
- #3.: troisième marque
- 21.: première délivrance
- 22.: permission de copie numérique
- 23.: seconde délivrance.
- 24.: interdiction de lecture des données numériques
- 25.: troisième délivrance
- 26.: quatrième délivrance
- 27.: interdiction de copie
- 28.: cinquième délivrance
- 29.: données numérique
- 30.: conversion
- 31.: signaux analogiques
- 32.: détection
- 33.: altération
- 34.: signaux analogiques altérés
- 35.: suppression de sortie des données numériques
- 42.: dispositif de lecture de données numériques
- 43.: sortie numérique
- 44.: sortie analogique
- 45.: système de déchiffrage
- 46.: système de protection pour la copie des données numériques
- 47.: partie de contrôle de l'enregistrement
- 48.: partie de contrôle de la lecture.

## Revendications

1. Méthode de protection contre la copie de données numériques stockées sur un support d'information consistant à délivrer une permission ou une interdiction de copie et/ou de lecture desdites données numériques en fonction de l'identification ou non d'au moins:
- un chiffrage desdites données numériques ; et
- un tatouage desdites données numériques.

2. Méthode selon la revendication 1, **caractérisée en ce qu'**une permission ou une interdiction de copie et/ou de lecture desdites données numériques est délivrée en fonction en outre de l'identification d'un type enregistrable ou non-enregistrable dudit support d'information.

3. Méthode selon l'une des revendications 1 ou 2, **caractérisée en ce qu'**une permission ou une interdiction de copie et/ou de lecture desdites données numériques est délivrée en fonction en outre de l'identification ou non d'une signature cryptographique accompagnant lesdites données numériques.

4. Méthode selon l'une des revendications 1 à 3, **caractérisée en ce qu'**une permission de copie numérique (22) est délivrée (21) lorsque :
- un chiffrage (2) desdites données numériques a été identifié ;
- un tatouage (3) desdites données numériques a été identifié ;
- un type de support (11) non-enregistrable a été identifié ; et
- une signature cryptographique (16) accompagnant lesdites données numériques a été identifiée.

5. Méthode selon la revendication 1, **caractérisée en ce qu'**une permission de copie numérique (22) est délivrée (25) lorsque :
- un chiffrage (2) desdites données numériques n'a pas été identifié ; et
- un tatouage (3) desdites données numériques n'a pas été identifié.

6. Méthode selon la revendication 1, **caractérisée en ce qu'**une interdiction de lecture (24) desdites données numériques est délivrée lorsque :
- un chiffrage (2) desdites données numériques n'a pas été identifié ; et
- un tatouage (3) desdites données numériques a été identifié.

7. Méthode selon l'une des revendications 1 ou 2, **caractérisée en ce qu'**une interdiction de copie (27) est délivrée (26) lorsque :
- un chiffrage (2) desdites données numériques a été identifié ;
- un tatouage (3) desdites données numériques a été identifié ; et
- un type de support (11) enregistrable a été identifié.

8. Méthode selon l'une des revendications 1 à 3, **caractérisée en ce qu'**une interdiction de copie (27) est délivrée (28) lorsque :
- un chiffrage (2) desdites données numériques a été identifié ;
- un tatouage (3) desdites données numériques a été identifié ;
- un type de support (11) non-enregistrable a été identifié ; et
- aucune signature cryptographique (16) accompagnant lesdites données numériques n'a été identifiée.

9. Méthode selon l'une des revendications 1 à 4, 7 ou 8, **caractérisée en ce qu'**elle comprend :
- une conversion (30) des données numériques (29) en signaux analogiques (31) ; et
- une altération (33) des signaux analogique si une interdiction de copie numérique (27) est délivrée.

10. Méthode de protection selon l'une quelconque des revendications 7 ou 8, **caractérisée en ce que** l'interdiction de copie numérique (27) comprend une suppression (35) de sortie des données numériques.

11. Dispositif de lecture de données numériques stockées sur un support d'informations comprenant au moins :
une sortie numérique (43) pour délivrer des signaux représentatifs des données numériques lors d'une lecture desdites données numériques ;
une sortie analogique (44) pour délivrer des signaux analogiques représentatifs des données numériques lors d'une lecture desdites données numériques ;
des moyens (45) de détection :
- d'un chiffrage desdites données numériques ;
- d'un tatouage desdites données numériques ;
- d'un type enregistrable ou non enregistrable dudit support d'information ;
- d'une signature cryptographique accompagnant lesdites données numériques ;
un système pour déchiffrer lesdites données numériques lorsqu'un chiffrage est détecté ;
un système de protection (46) contre la copie desdites données numériques recevant des signaux desdits moyens (45) de détection et générant un signal de permission de copie (22) ou un signal d'interdiction de copie (27) en mettant en oeuvre la méthode selon l'une des revendications 4, 5, 7 ou 8 ;
des moyens de contrôle (47) de l'enregistrement supprimant les signaux délivrés à la sortie numérique (43) lorsque lesdits moyens de contrôle reçoivent un signal d'interdiction de copie (27) du système de protection (46) ;
un système de protection (46) de la lecture recevant des signaux desdits moyens (45) de détection et générant un signal d'interdiction de lecture (24) en mettant en oeuvre la méthode selon la revendication 6 ; et
des moyens de contrôle de la lecture (48) interrompant la lecture des données ou leur sortie vers la sortie analogique (44) lorsque lesdits moyens de contrôle reçoivent un signal d'interdiction de lecture du système de protection (46).

## Claims

1. Method of protection against the copying of digital data stored on an information carrier consisting in delivering a permission or a prohibition to copy and/or to play said digital data as a function of the identification or otherwise of at least:
- an encryption of said digital data; and
- a watermarking of said digital data.

2. Method according to claim 1, **characterized in that** a permission or a prohibition to copy and/or to play said digital data is delivered as a further function of the identification of a recordable or non-recordable type of said information carrier.

3. Method according to one of claims 1 or 2, **characterized in that** a permission or a prohibition to copy and/or to play said digital data is delivered as a further function of the identification or not of a cryptographic signature accompanying said digital data.

4. Method according to one of claims 1 to 3, **characterized in that** a permission for digital copying (22) is delivered (21) when:
- an encryption (2) of said digital data has been identified;
- a watermarking (3) of said digital data has been identified;
- a non-recordable type of carrier (11) has been identified; and
- a cryptographic signature (16) accompanying said digital data has been identified.

5. Method according to claim 1, **characterized in that** a permission for digital copying (22) is delivered (25) when:
- an encryption (2) of said digital data has not been identified; and
- a watermarking (3) of said digital data has not been identified.

6. Method according to claim 1, **characterized in that** a prohibition of playing (24) of said digital data is delivered when:
- an encryption (2) of said digital data has not been identified; and
- a watermarking (3) of said digital data has been identified.

7. Method according to one of claims 1 or 2, **characterized in that** a prohibition of copying (27) is delivered (26) when:
- an encryption (2) of said digital data has been identified;
- a watermarking (3) of said digital data has been identified; and
- a recordable type of carrier (11) has been identified.

8. Method according to one of claims 1 to 3, **characterized in that** a prohibition of copying (27) is delivered (28) when:
- an encryption (2) of said digital data has been identified;
- a watermarking (3) of said digital data has been identified;
- a non-recordable type of carrier (11) has been identified; and
- no cryptographic signature (16) accompanying said digital data has been identified.

9. Method according to one of claims 1 to 4, 7 or 8, **characterized in that** it comprises :
- a conversion (30) of the digital data (29) into analog signals (31); and
- a corruption (33) of the analog signals if a prohibition of digital copying (27) is delivered.

10. Method of protection according to either of claims 7 or 8, **characterized in that** the prohibition of digital copying (27) comprises a blocking (35) of output of the digital data.

11. Device for playing digital data stored on an information carrier comprising at least:
a digital output (43) for delivering signals representative of the digital data upon playing said digital data;
an analog output (44) for delivering analog signals representative of the digital data upon playing said digital data;
means (45) for detecting:
- an encryption of said digital data;
- a watermarking of said digital data;
- a recordable or non-recordable type of said information carrier;
- a cryptographic signature accompanying said digital data;
a system for decrypting said digital data when an encryption is detected;
a system for protection (46) against the copying of said digital data receiving signals from said detection means (45) and generating a copy permission signal (22) or a copy prohibition signal (27) by employing the method according to one of claims 4, 5, 7 or 8;
recording control means (47) blocking the signals delivered at the digital output (43) when said control means receive a copy prohibition signal (27) from the protection system (46);
a system for protection (46) against playing receiving signals from said detection means (45) and generating a playing prohibition signal (24) by employing the method according to claim 6; and
playing control means (48) interrupting the playing of the data or their output to the analog output (44) when said control means receive a playing prohibition signal from the protection system (46).

## Patentansprüche

1. Verfahren zum Schutz gegen das Kopieren von digitalen, auf einem Informationsträger gespeicherten Daten, darin bestehend, eine Erlaubnis oder ein Verbot des Kopierens und/oder des Lesens der digitalen Daten in Abhängigkeit von der Identifizierung oder Nichtidentifizierung von mindestens
- einer Verschlüsselung der digitalen Daten und
- einer Tätowierung der digitalen Daten zu erteilen.

2. Verfahren nach Anspruch 1, **dadurch gekennzeichnet, dass** eine Erlaubnis oder ein Verbot des Kopierens und/oder des Lesens der digitalen Daten ferner in Abhängigkeit von der Identifizierung eines beschreibbaren oder nicht beschreibbaren Typs des Informationsträgers erteilt wird.

3. Verfahren nach einem der Ansprüche 1 oder 2, **dadurch gekennzeichnet, dass** eine Erlaubnis oder ein Verbot des Kopierens und/oder des Lesens der digitalen Daten ferner in Abhängigkeit von der Identifizierung oder Nichtidentifizierung einer kryptographischen, die digitalen Daten begleitenden Signatur erteilt wird.

4. Verfahren nach einem der Ansprüche 1 bis 3, **dadurch gekennzeichnet, dass** eine Erlaubnis des digitalen Kopierens (22) erteilt wird (21), wenn:
- eine Verschlüsselung (2) der digitalen Daten identifiziert wurde,
- eine Tätowierung (3) der digitalen Daten identifiziert wurde,
- ein nicht beschreibbarer Trägertyp (11) identifiziert wurde und
- eine kryptographische, die digitalen Daten begleitende Signatur (16) identifiziert wurde.

5. Verfahren nach Anspruch 1, **dadurch gekennzeichnet, dass** eine Erlaubnis des digitalen Kopierens (22) erteilt wird (25), wenn:
- eine Verschlüsselung (2) der digitalen Daten nicht identifiziert wurde und
- eine Tätowierung (3) der digitalen Daten nicht identifiziert wurde.

6. Verfahren nach Anspruch 1, **dadurch gekennzeichnet, dass** ein Verbot des Lesens (24) der digitalen Daten erteilt wird, wenn:
- eine Verschlüsselung (2) der digitalen Daten nicht identifiziert wurde und
- eine Tätowierung (3) der digitalen Daten identifiziert wurde.

7. Verfahren nach einem der Ansprüche 1 oder 2, **dadurch gekennzeichnet, dass** ein Kopierverbot (27) erteilt wird (26), wenn:
- eine Verschlüsselung (2) der digitalen Daten identifiziert wurde,
- eine Tätowierung (3) der digitalen Daten identifiziert wurde und
- ein beschreibbarer Trägertyp (11) identifiziert wurde.

8. Verfahren nach einem der Ansprüche 1 bis 3, **dadurch gekennzeichnet, dass** ein Kopierverbot (27) erteilt wird (28), wenn:
- eine Verschlüsselung (2) der digitalen Daten identifiziert wurde,
- eine Tätowierung (3) der digitalen Daten identifiziert wurde,
- ein nicht beschreibbarer Trägertyp (11) identifiziert wurde und
- keine kryptographische, die digitalen Daten begleitende Signatur (16) identifiziert wurde.

9. Verfahren nach einem der Ansprüche 1 bis 4, 7 oder 8, **dadurch gekennzeichnet, dass** sie Folgendes umfasst:
- eine Umwandlung (30) der digitalen Daten (29) in analoge Signale (31) und
- eine Veränderung (33) der analogen Signale, wenn ein Verbot des digitalen Kopierens (27) erteilt wird.

10. Schutzverfahren nach einem der Ansprüche 7 oder 8, **dadurch gekennzeichnet, dass** das Verbot des digitalen Kopierens (27) eine Unterdrückung (35) einer Ausgabe der digitalen Daten umfasst.

11. Vorrichtung zum Lesen von digitalen, auf einem Informationsträger gespeicherten Daten mit mindestens
- einem digitalen Ausgang (43) zur Abgabe von für die digitalen Daten repräsentativen Signalen bei einem Lesen der digitalen Daten,
- einem analogen Ausgang (44) zur Abgabe von für die digitalen Daten repräsentativen analogen Signalen bei einem Lesen der digitalen Daten;
- Mittel (45) zur Detektion
- einer Verschlüsselung der digitalen Daten,
- einer Tätowierung der digitalen Daten,
- eines beschreibbaren oder nicht beschreibbaren Typs des Informationsträgers,
- einer kryptographischen, die digitalen Daten begleitenden Signatur;
- einem System zur Entschlüsselung der digitalen Daten, wenn eine Verschlüsselung detektiert wird;
- einem System zum Schutz (46) gegen das Kopieren der digitalen Daten, das von den Detektionsmitteln (45) Signale empfängt und unter Umsetzung des Verfahrens nach einem der Ansprüche 4, 5, 7 oder 8 ein Kopiererlaubnissignal (22) oder ein Kopierverbotssignal (27) erzeugt;
- Mitteln zur Kontrolle (47) der Aufnahme, die die am digitalen Ausgang (43) abgegebenen Signale unterdrücken, wenn die Kontrollmittel von dem Schutzsystem (46) ein Kopierverbotssignal (27) empfangen;
- einem System zum Schutz (46) des Lesens, das Signale von den Detektionsmitteln (45) empfängt und unter Umsetzung des Verfahrens nach Anspruch 6 ein Leseverbotssignal (24) erzeugt und
- Mitteln zur Kontrolle des Lesens (48), die das Lesen der Daten und deren Ausgabe zu dem analogen Ausgang (44) unterbrechen, wenn die Kontrollmittel von dem Schutzsystem (46) ein Leseverbotssignal empfangen.
